# EUROPEAN PATENT SPECIFICATION

(11) **EP 2 154 196 B1**
(45) Date of publication and mention of the grant of the patent: **25.01.2017**
(21) Application number: 08753062.2
(22) Date of filing: 21.05.2008
(51) Int. Cl.: C08L 33/08, C08K 3/04, C08K 5/18, C08K 5/19, C08K 5/3445, C08K 5/37, C08K 5/372, C08K 5/405, C08K 5/521, F16L 11/04

(54) **ACRYLIC RUBBER COMPOSITION, VULCANIZED RUBBER OBTAINED THEREFROM, AND USE THEREOF**
ACRYLKAUTSCHUKZUSAMMENSETZUNG, VULKANISIERTER KAUTSCHUK DARAUS UND VERWENDUNG
COMPOSITION DE CAOUTCHOUC ACRYLIQUE, CAOUTCHOUC VULCANISÉ OBTENU À PARTIR DE CETTE COMPOSITION ET SON UTILISATION

(30) Priority: 13.06.2007 JP 2007155857
(43) Date of publication of application: 17.02.2010
(73) Proprietor: Denka Company Limited, Tokyo 103-8338 (JP)
(72) Inventor: MIYAUCHI, Toshiaki, Itoigawa-shi Niigata 949-0393 (JP); ABE, Yasushi, Itoigawa-shi Niigata 949-0393 (JP)
(74) Representative: Hartz, Nikolai
(86) International application number: PCT/JP2008/059385
(87) International publication number: WO 2008/152890

(56) References cited:
- EP-A1- 0 561 631
- EP-A2- 1 201 704
- WO-A1-00/63289
- WO-A1-97/03122
- WO-A1-2005/116134
- WO-A1-2007/026596
- WO-A1-2007/055038
- JP-A- 03 000 241
- JP-A- 06 057 037
- JP-A- 11 106 562
- JP-A- 11 217 481
- JP-A- 2000 026 713
- JP-A- 2000 143 873
- JP-A- 2006 206 659

## Description

### TECHNICAL FIELD

The present invention relates to an acrylic rubber composition having the heat resistance improved and a vulcanized rubber thereof and its applications.

### BACKGROUND ART

Along with large sizing and higher functionalization of industrial machines, rubber components to be used for such machines are required to have higher heat resistance or durability. Particularly, even when they are used under a high temperature condition, they are required to have sufficient durability so that they can be continuously used for a long time.

In an engine room of an automobile, the temperature becomes high due to the heat generated from the engine. Therefore, for a rubber hose to be used in an engine room of an automobile, one prepared by using an acryl rubber excellent in heat resistance and oil resistance as the raw material and having such a raw material vulcanized, has been used. However, due to exhaust emission controls, a trend toward higher output power of engine, in recent years, thermal conditions in an engine room have become severer, and the rubber hose to be used therein is required to have higher heat resistance than ever.

As a means to improve the heat resistance of such a rubber hose, a technique of blending a specific carbon black to an acrylic rubber composition (e.g. Patent Document 1 and 3 ) or a technique of
blending specific antioxidants in combination (e.g. Patent Document 2) has been known.
Patent Document 1: JP-A-2000-248139
Patent Document 2: JP-A-2002-302576
Patent Document 3: EP1201703

### DISCLOSURE OF THE INVENTION

### OBJECT TO BE ACCOMPLISHED BY THE INVENTION

The object of the present invention is to provide an acrylic rubber composition whereby, when vulcanized, it is possible to obtain a vulcanized rubber having high heat resistance, especially with little changes in the elongation at break (EB) and hardness under heating conditions, and such a vulcanized rubber.

### MEANS TO ACCOMPLISH THE OBJECT

That is, the present invention provides the following.
(1) An acrylic rubber composition comprising an epoxy group-containing acrylic rubber and, per 100 parts by mass of the epoxy group-containing acrylic rubber, from 10 to 100 parts by mass of carbon black having an average laminated height Lc of at least 1.5 nm in the C-axis direction of a laminar plane in its crystallite, from 0.1 to 15 parts by mass of at least one primary antioxidant selected from the group consisting of an amine antioxidant and a phenolic antioxidant, from 0.1 to 15 parts by mass of at least one secondary antioxidant selected from the group consisting of a phosphorus antioxidant and a sulfur antioxidant, from 0.1 to 5 parts by mass of an imidazole compound, from 0.1 to 5 parts by mass of a trimethylthiourea, and from 0.1 to 5 parts by mass of a quaternary ammonium salt.
(2) The acrylic rubber composition according to the above (1), wherein the carbon black is one having an average laminated height Lc of at least 2 nm in the C-axis direction of a laminar plane in its crystallite.
(3) The acrylic rubber composition according to the above (1) or (2), wherein the carbon black is acetylene black.
(4) The acrylic rubber composition according to any one of the above (1) to (3), wherein the primary antioxidant is an amine antioxidant.
(5) The acrylic rubber composition according to any one of the above (1) to (4), wherein the primary antioxidant is 4,4'-α,α-dimethylbenzyldiphenylamine, and the secondary antioxidant is at least one member selected from the group consisting of tris(nonylphenyl) phosphite, triisodecyl phosphite and dilauryl thiodipropionate.
(6) The acrylic rubber composition according to any one of the above (1) to (5), which further contains at least one compound selected from the group consisting of 2-mercaptobenzimidazole, 2-mercaptomethylbenzimidazole and 4,5-mercaptomethylbenzimidazole.
(7) A vulcanized rubber obtained by vulcanizing the acrylic rubber composition as defined in any one of the above (1) to (6).
(8) A rubber hose comprising the vulcanized rubber as defined in the above (7).
(9) A sealing article comprising the vulcanized rubber as defined in the above (7).
(10) A rubber vibration insulator comprising the vulcanized rubber as defined in the above (7).

### EFFECT OF THE INVENTION

According to the present invention, an acrylic rubber composition and a vulcanized rubber which ensure high heat resistance, especially little changes in the elongation at break (EB) and hardness under heating conditions of the vulcanized rubber, can be obtained.

### BEST MODE FOR CARRYING OUT THE INVENTION

The acrylic rubber composition of the present invention comprises an epoxy group-containing acrylic rubber, a specific carbon black, a specific primary antioxidant, a specific secondary antioxidant and a specific vulcanizer.

The epoxy group-containing acrylic rubber is an acrylic rubber containing an epoxy group as a crosslinkable site, and is obtainable by copolymerizing a crosslinkable monomer having a functional group effective as a crosslinkable site and at least one monomer copolymerizable therewith by a known method such as emulsion polymerization, suspension polymerization, solution polymerization or bulk polymerization. Here, the crosslinkable site means an epoxy group in the epoxy group-containing acrylic rubber provided to be bonded with a vulcanizer to form a network structure.

The crosslinkable monomer may be one containing an epoxy group such as glycidyl acrylate, glycidyl methacrylate, allyl glycidyl ether or methallyl glycidyl ether. The acrylic rubber in the present invention is preferably one containing such crosslinkable monomer units in an amount of from 0 to 5 mass%, preferably from 0.1 to 5 mass%, particularly preferably from 0.5 to 3 mass%.

The monomer copolymerizable with the crosslinkable monomer may be an acrylic acid alkyl ether or an acrylic acid alkoxy alkyl ester as the main component, and a copolymerizable ethylenic unsaturated compound as other component. The acrylic acid alkyl ester may, for example, be methyl acrylate, ethyl acrylate, n-propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, n-decyl acrylate, n-dodecyl acrylate, n-octadecyl acrylate, cyanomethyl acrylate, 1-cyanoethyl acrylate, 2-cyanoethyl acrylate, 1-cyanopropyl acrylate, 2-cyanopropyl acrylate, 3-cyanopropyl acrylate, 4-cyanobutyl acrylate, 6-cyanohexyl acrylate, 2-ethyl-5-cyanohexyl acrylate or 8-cyanooctyl acrylate.

The acrylic acid alkoxy alkyl ester may, for example, be 2-methoxyethyl acrylate, 2-ethoxyethyl acrylate, 2-(n-propoxy)ethyl acrylate, 2-(n-butoxy)ethyl acrylate, 3-methoxypropyl acrylate, 3-ethoxypropyl acrylate, 2-(n-propoxy)propyl acrylate or 2-(n-butoxy)propyl acrylate.

Further, as the copolymerizable ethylenic unsaturated compound, various compounds may be used as the case requires. It may, for example, be a fluorinated acrylic acid ester such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate or 1,1-dihydroperfluorodecyl (meth)acrylate; a hydroxy group-containing acrylic acid ester such as 1-hydroxypropyl (meth)acrylate, 2-hydroxypropyl (meth)acrylate or hydroxyethyl (meth)acrylate; a tertiary amino group-containing acrylic acid ester such as diethylaminoethyl (meth)acrylate or dibutylaminoethyl (meth)acrylate; a methacrylate such as methyl methacrylate or octyl methacrylate; an alkyl vinyl ketone such as methyl vinyl ketone; a vinyl or aryl ether such as vinyl ethyl ether or allyl methyl ether; a vinyl aromatic compound such as styrene, α-methylstyrene, chlorostyrene or vinyl toluene; a vinyl nitrile such as acrylonitrile or methacrylonitrile; or ethylene, propylene, vinyl chloride, vinylidene chloride, vinyl fluoride, vinylidene fluoride, vinyl acetate, vinyl propionate or an alkyl fumarate.

The carbon black in the present invention is one to be incorporated to improve the heat resistance of a vulcanized rubber obtainable by vulcanizing the acrylic rubber composition, and any of thermal black or acetylene black prepared by a heat decomposition method, or furnace black or channel black prepared by an incomplete combustion method may be used. It is particularly preferred to use one having an average laminated height Lc of preferably at least 2 nm, particularly preferably at least 2.5 nm, in the C-axis direction of a laminar plane in its crystallite, whereby the heat resistance of a vulcanized rubber obtainable by vulcanizing the acrylic rubber composition will be more improved. Among such carbon blacks, acetylene black obtainable by thermal decomposition of acetylene gas is particularly preferred, since it is one having crystallization remarkably progressed, whereby the structure is highly developed, and the effect to improve the heat resistance of the vulcanized rubber is large. Here, the average laminated height Lc in the C-axis direction of a laminar plane in its crystallite can be determined by a X-ray diffraction method as disclosed in "Carbon Black Handbook" (p61-62, published by Carbon Black Association in 1995).

The amount of carbon black is preferably from 10 to 100 parts by mass, more preferably from 30 to 80 parts by mass, per 100 parts by mass of the acrylic rubber. If the amount exceeds 100 parts by mass, the processability tends to be poor, and scorching is likely to occur, or the embrittlement temperature of the vulcanized product tends to be high. If the amount is less than 10 parts by mass, the tensile strength or the modulus of the vulcanized product tends to be low.

The carbon black to be incorporated to the acrylic rubber composition of the present invention may be combined with at least one type of other carbon blacks within a range not to impair the purpose of the present invention.

The primary antioxidant is at least one antioxidant selected from the group consisting of an amine antioxidant and a phenolic antioxidant and is one to be incorporated in order to improve the heat resistance, particularly the elongation at break, of a vulcanized rubber obtainable by vulcanizing the acrylic rubber composition. The primary antioxidant is particularly preferably an amine antioxidant.

The amine antioxidant may, for example, be a diphenylamine antioxidant such as octylated diphenylamine, dioctylated diphenylamine, 4,4'-(α,α-dimethylbenzyl)diphenylamine, p-(p-toluene sulfonylamine)diphenylamine, a reaction product of diphenylamine with acetone, a reaction product of diphenylamine with isobutylene, a reaction product of diphenylamine with acetone and aniline, or various alkylated diphenylamines; p-phenylenediamine antioxidant such as N,N'-diphenyl-p-phenylenediamine, N-isopropyl-N'-phenyl-p-phenylenediamine, N,N'-di-2-naphtyl-p-penylenediamine, N-cyclohexyl-N'-phenyl-p-phenylenediamine, N-phenyl-N'-(3-methaloyloxy-2-hydroxypropyl)-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, a mixed diaryl-p-phenylenediamine or phenylhexyl-p-phenylenediamine; a naphthylamine antioxidant such as phenyl-α-naphthylamine or phenyl-β-naphthylamine; a quinoline antioxidant such as 2,2,4-trimethyl-1,2-dihydroquinoline or 6-ethoxy-2,2,4-trimethyl-1,2-dihydroquinoline; a condensed product of another aromatic amine with an aliphatic amine, or a condensed product of butylaldehide with aniline. They may be used alone or in combination as a mixture of two or more of them.

Among them, as the amine antioxidant, 4,4'-(α,α-dimethylbenzyl)diphenylamine, octylate diphenylamine or dioctylated diphenylamine is preferred.

The phenolic antioxidant may, for example, be 2,6-di-t-butyl-p-cresol, 2-t-butyl-4-methoxyphenol, 3-t-butyl-4-methoxyphenol, 2,6-di-t-butyl-4-ethylphenol, 2,6-di-t-butyl-4-secbutylphenol, 2-(1-methylcyclohexyl)-4,6-dimethylphenol, 2,6-di-t-butyl-a-dimethylamino-p-cresol, 2,4,6-tri-t-butylphenol, styrenated phenol, alkylated phenol, 2,6-diphenyl-4-octadecyloxyphenol, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2-[1-(2-hydroxy-3,5-di-t-butyl-3,5-di-t-pentylphenyl)-ethyl]4,6-di-t-pentylphenyl acrylate, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis[6-(1-methylcyclohexyl)phenol, 2,2'-methylenebis(4-methylcyclohexyl)-p-cresol], 2,2'-methylenebis(6-α-methylbenzyl-p-cresol), a methylene-crosslinked polyhydric alkylphenol, bis[3,3-bis(4-hydroxy-3-t-butylphenyl)butyric acid]glycol ester, 4,4'-butylidenebis(6-t-butyl-m-cresol), 2,2'-ethylidenebis(4-sec-butyl-6-t-butylphenol), 2,2'-ethylidenebis(4,6-di-t-butylphenol), triethylene glycolbis[3-(3-t-butyl-5-methyl-4-hydroxyphenol)propionate], 1,6-hexanediolbis[3-(3,5-di-t-butyl-4-hydroxyphenyl)propionate], 1,1-bis-(4-hydroxyphenyl)cyclohexane, 2,2'-dihydroxy-3,3'-(α-methylcyclohexyl)-5,5'-dimethyldiphenylmethane, 3,9-bis[2-{3-(3-t-butyl-4-hydroxy-5-methylphenyl)propionyloxy}-1,1-dimethylethyl]-2,4,8,10-tetraoxaspiro(5,5)undecane, an alkylated bisphenol, a butylated reaction product of p-cresol with dicyclopentadiene, a polybutylated bisphenol A, 1,1,3-tris(2-methyl-4-hydroxy-5-t-butylphenyl)butane, 1,3,5-tris(3,5-di-t-butyl-4-hydroxybenzyl)-2,4,6-trimethylbenzene, 1,3,5-tris(4-t-butyl-3-hydroxy-2,6-dimethylbenzyl) isocyanurate, 1,3,5-tris(3,5-di-t-butyl-4-hydroxylbenzyl) isocyanurate, a 3,5-di-t-butyl-4-hydroxyhydocinnamic acid triester of 1,3,5-tri(2-hydroxyethyl)-S-triazine-2,4,6-(1 H,3H,5H)trione, tetrakis[methylene-3-(3,5-di-t-butyl-4-hydroxyphenyl)propionate]methane, 4,4'-thiobis(6-t-butyl-m-cresol), 4,4'-thoibis(6-t-butyl-o-cresol), bis(3,5-di-t-butyl-4-hydroxybenzyl) sulfide, 2,2-thiobis(4-methyl-6-t-butylphenol), 2,2-thiodiethylenebis[3-(3,5-di-t-butyl-4-hydroxyphenyl)propionate], 2,4-bis[(octylthio)methyl]-o-cresol, N,N'-hexamethylenebis(3,5-di-t-butyl-4-hydroxyhydrocinnamide), 2,4,6-tris-(3,5-di-t-butyl-4-hydroxybenzylthio)-1,3,5-triazine, 2,4-bis(n-octylthio)-6-(4-hydroxy-3,5-di-t-butylaniline)-1,3,5-triazine, bis(3,5-di-t-butyl-4-hydroxybenzylphosphonic acid ethyl)calcium, or 3,5-di-t-butyl-4-hydroxybenzylphosphonate diethyl ester.

Among them, as the phenolic antioxidant, 2,6-di-t-butyl-p-cresol, 2,2'-methylenebis(4-methyl-6-t-butylphenol) or 4,4'-thiobis(6-t-butyl-m-cresol) is preferred.

The amount of such primary antioxidants is, in total, preferably from 0.1 to 15 parts by mass, more preferably from 0.5 to 5 parts by mass, per 100 parts by mass of the acrylic rubber. If the amount exceeds 15 parts by mass, the tensile strength at break after thermal aging tends to be low. If the amount is less than 0.1 part by mass, the elongation at break after thermal aging tends to be small.

The secondary antioxidant is at least one antioxidant selected from the group consisting of a phosphorus antioxidant and a sulfur antioxidant and is one to be incorporated in order to improve the heat resistance, particularly the elongation at break, of a vulcanized rubber obtained by vulcanizing the acrylic rubber composition. The secondary antioxidant is particularly preferably a phosphorus antioxidant.

The phosphorus antioxidant may, for example, be triphenyl phosphite, diphenyl-2-ethylhexyl phosphite, diphenylisooctyl phosphite, diphenylisodecyl phosphite, diphenyltridecyl phosphite, diphenylnonylphenyl phosphite, dibutylhydrogen phosphite, 4,4-butylidenebis(3-methyl-6-t-butylphenyldidodecyl) phosphite, tris(2-ethylhexyl) phosphite, triisodecyl phosphite, tris(tridecyl) phosphite, tris(nonylphenyl) phosphite, tris(dinonylphenyl) phosphite, diisodecylpentaerythritol diphosphite, distearylpentaerythritol diphosphite, bisnonylphenylpentaerythritol diphosphite, tris(4-oxy-2,5-di-t-dibutylphenyl)phosphite, tris(4-oxy-3,5-di-t-butylphenyl) phosphite, tris(2,4-di-t-butylphenyl) phosphite, 1,1,3-tris(2-methyl-4-ditridecyl phophite-5-t-butylphenyl)butane, 2,2-methylenebis(4,6-di-t-butylphenyl)octyl phosphite, tetraphenyldipropylene glycol diphosphite, tetraphenyltetra(tridecyl)pentaerythritol tetraphosphite, 4,4'-butylidenebis(3-methyl-6-t-butylditridecyl phosphite), 2,2'-ethylidenebis(3-methyl-6-t-butylphenol)fluorophosphite, cyclicneopentanetetraylbis(octadecyl) phosphite, 4,4'-isopropylidenediphenolalkyl (C₁₂-C₁₈) phosphite, cyclicneopentanetetraylbis(2,4-di-t-butylphenyl phosphite), cyclicneopentanetetraylbis(2,6-di-t-butyl-4-methylphenyl phosphite), cyclicneopentanetetraylbis(nonylphenyl phosphite) or a hydrogenated bisphenol A-pentaerythritol phosphite polymer.

Among them, as the phosphorus antioxidant, tris(nonylphenyl) phosphite, triisodecyl phosphite, triphenyl phosphite or tris(2,4-di-t-butylphenyl) phosphite is preferred.

The sulfur antioxidant may, for example, be a dialkyl thiodipropionate such as dilauryl thiodipropionate, ditridecyl thiodipropionate, dimyristyl thiodipropionate or distearyl thiodipropionate; a polyhydric alcohol of an alkyl thiopropionic acid such as butyl thiopropionic acid, octyl thiopropionic acid, lauryl thiopropionic acid or stearyl thiopropionic acid; an ester such as glycerol, trimethylol ethane, trimethylol propane, pentaerythritol or trishydroxyethylisocyanurate, or pentaerythritoltetralauryl thiopropionate.

Among them, as the sulfur antioxidant, dilauryl thiodipropionate, ditridecyl thiodipropionate, dimyristyl thiodipropionate or pentaerythritoltetralauryl thiopropionate is preferred.

To the acrylic rubber composition, at least one compound selected from the group consisting of 2-mercaptobenzimidazole, 2-mercaptomethylbenzimidazole and 4,5-mercaptomethylbenzimidazole, is preferably incorporated, whereby the heat resistance, particularly the elongation at break (EB) of the obtainable vulcanizable rubber will be further improved. The amount of such compounds is preferably from 0.1 to 5 parts by mass, further preferably from 0.5 to 2.0 parts by mass, in total, per 100 parts by mass of the acrylic rubber.

The acrylic rubber composition may further be vulcanized by adding a specific vulcanizer, to obtain a vulcanized rubber. As the vulcanizer, a vulcanizer comprising an imidazole compound, trimethylthiourea and a quaternary ammonium salt is used.

The imidazole compound may, for example, be 1-methylimidazole, 1,2-dimethylimidazole, 1-methyl-2-ethylimidazole, 1-benzyl-2-ethylimidazole, 1-benzyl-2-ethyl-5-methylimidazole, 1-benzyl-2-phenylimidazole, 1-benzyl-2-phenylimidazole trimellitate, 1-aminoethylimidazole, 1-aminoethyl-2-methylimidazole, 1-aminoethyl-2-ethylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, 1-cyanoethyl-2-ethyl-4-methylimidazole trimellitate, 1-cyanoethyl-2-undecylimidazole trimellitate, 2,4-diamino-6-[2'-methylimidazolyl-(1)']ethyl-s-triazine/isocyanuric acid adduct, 1-cyanoethyl-2-phenyl-4,5-di-(cyanoethoxymethyl)imidazole, N-(2-methylimidazolyl-1-ethyl)urea, N,N'-bis-(2-methylimidazolyl-1-ethyl)urea, 1-(cyanoethylaminoethyl)-2-methylimidazole, N,N'-[2-methylimidazolyl-(1)-ethyl]-adipoyldiamide, N,N'-[2-methylimidazolyl-(1)-ethyl]-dodecane dioyldiamide, N,N'-[2-methylimidazolyl-(1)-ethyl]-eicosane dioyldiamide, 2,4-diamino-6-[2'-methylimidazolyl-(1)']-ethyl-s-triazine, 2,4-diamino-6-[2'-undecylimidazolyl-(1)']-ethyl-s-triazine, 1-dodecyl-2-methyl-3-benzylimidazolium chloride or 1,3-dibenzyl-2-methylimidazolium chloride.

The amount of such an imidazole compound is preferably from 0.2 to 5 parts by mass, more preferably from 0.5 to 3 parts by mass per 100 parts by mass of the acrylic rubber. If the amount is less than 0.2 part by mass, physical properties of the elastomer vulcanized product tend to be insufficient, and if it exceeds 5 parts by mass, the processing safety may be impaired.

The amount of trimethylthiourea is preferably from 0.1 to 5 parts by mass, more preferably from 0.3 to 4 parts by mass per 100 parts by mass of the acrylic rubber. If the amount is less than 0.1 part by mass, improvement in the vulcanization rate and the compression set tends to be insufficient, and if its exceeds 5 parts by mass, there may be a problem in forming.

As the quaternary ammonium salt, one represented by the following formula (3) is used:

[R₁R₂R₃R₄N]⁺X⁻ Formula (3)

wherein each of R₁, R₂, R₃ and R₄ which are independent of one another, is a C₁₋₂₅ alkyl group, an alkoxy group, an aryl group, an alkyl aryl group, an aralkyl group or a polyoxyalkylene group, provided that two or three of them may form a heterocyclic structure, and X is an anion of a halogen atom such as Cl, Br or I.

The quaternary ammonium salt may, for example, tetraethylammonium bromide, tetrabutylammonium bromide, tetrabutylammonium chloride, tetrabutylammonium iodide, cetyltrimethylammonium bromide, n-dodecyltrimethylammonium bromide, cetyldimethylbenzylammonium chloride, methylcetyldibenzylammonium bromide, cetyldimethylethylammonium bromide, octadecyltrimethylammonium bromide, cetylpyridium chloride, ethylpyridium bromide, 1,8-diaza-bicyclo(5,4,0)undecene-7-benzylammonium chloride or cetylpyridium iodide.

The amount of such a quaternary ammonium salt is preferably from 0.1 to 5 parts by mass, more preferably from 0.3 to 2 parts by mass per 100 parts by mass of the acrylic rubber. If the amount is less than 0.1 part by mass, improvement in the vulcanization rate and the compression set tends to be insufficient, and if it exceeds 5 parts by mass, the processing safety may be impaired.

The imidazole compound, the trimethylthiourea and the quaternary ammonium salt exhibit synergistic effects with the antioxidant by simultaneous use of them, and particularly, they can dramatically improve the heat resistance of an acrylic rubber composition to be obtainable.

For the purpose of adjusting the vulcanization rate, a curing agent for an epoxy resin, for example, a thermally decomposed ammonium salt, an organic acid, an acid anhydride, an amine, sulfur or a sulfur compound, may be added within a range not to reduce the effect of the present invention.

An acrylic rubber composition is one obtainable by kneading these compounds at a temperature of not higher than the vulcanization temperature. The obtained acrylic rubber composition may be formed into a desired various shape, followed by vulcanization to obtain a vulcanized product, or it may be vulcanized and then may be formed into various shapes. The vulcanization temperature may suitably be set depending upon the formulation of the rubber composition or the type of the vulcanizer, and it is usually preferably within a range of from 140 to 200°C, more preferably within a range of from 150 to 180°C.

As a machine to knead, mold or vulcanize the acrylic rubber composition or its vulcanized product, one commonly used in the rubber industry may be used.

The vulcanized rubber obtainable by vulcanizing the acrylic rubber composition is used, particularly, for rubber hoses, sealing articles such as gaskets or packings, and rubber vibration insulators. With respect to rubber hoses, it is specifically used for hoses to be used for e.g. various pipings for automobiles, construction machines or hydraulic equipments.

Particularly, rubber hoses obtainable from the acrylic rubber composition and its vulcanized rubber of the present invention are excellent in rubber physical properties such as extrusion processability, tensile strength, and further excellent in oil resistance, cold resistance and heat resistance, so that they can be quite suitably used as rubber hoses for automobiles, which recently tend to be used in a severer environment.

Here, the heat resistance can be experimentally evaluated in accordance with JIS K6257 by obtaining elongation at break by tensile tests after exposure at 200°C for 7 days. The larger the absolute value of this elongation at break, the better the heat resistance. The absolute value of this elongation at break being maintained at a level of at least 100% means that the heat resistance is excellent.

A structure of a rubber hose may be a single hose obtained from the acrylic rubber composition of the present invention. Otherwise, depending upon the application of the rubber hose, it may be applicable to a composite hose wherein a synthetic rubber other than the acrylic rubber of the present invention, for example, a fluorinated rubber, a fluorine-modified acrylic rubber, a hydrin rubber, CSM (chlorosulfonated polyethylene rubber), CR (chloroprene rubber), NBR (acrylonitrile butadiene rubber), an ethylene/propylene rubber, an acrylic rubber other than the acrylic rubber composition of the present invention is used for an inner layer, an inter layer or an outer layer.

Further, depending upon the properties required for a rubber hose, it is also possible to provide an intermediate or outermost layer of the rubber hose with a reinforcing fiber or wire, as is generally commonly carried out.

### EXAMPLES

Now, the present invention will be described in further detail with reference to Examples. However, it should be understood that the present invention is by no means restricted to such Examples.

### PREPARATION EXAMPLE 1

### PREPARATION OF EPOXY GROUP-CONTAINING ACRYLIC RUBBER

Into a pressure resistant reactor having an internal capacity of 40 liters, 11 kg of a mixed liquid of 5.5 kg of ethyl acrylate and 5.5 kg of n-butyl acrylate, 17 kg of an aqueous solution containing 4 mass% of partially saponifized polyvinyl alcohol, 22 g of sodium acetate and 120 g of glycidyl methacrylate were introduced and preliminarily thoroughly mixed by a stirrer to prepare a uniform suspension. The air at the upper portion in the vessel was replaced with nitrogen, then ethylene was injected to the upper portion in the vessel to adjust the pressure to 21 kg/cm². Stirring was continued to maintain the interior at 55°C, and then from a separate inlet, an aqueous t-butyl hydroperoxide solution (0.3 mass% aqueous solution, 1 L) was injected to initiate the polymerization. The temperature in the vessel was maintained at 55°C during the reaction, and the reaction was completed in 6 hours. An aqueous sodium borate solution (3 mass% aqueous solution, 10 L) was added to the formed polymer solution to solidify the polymer, followed by dehydration and drying to obtain an epoxy group-containing acrylic rubber.

### EXAMPLES 1 TO 18 AND COMPARATIVE EXAMPLES 1 TO 5

### PREPARATION OF ACRYLIC RUBBER COMPOSITION AND VULCANIZED PRODUCT

100 parts by mass of the epoxy group-containing acrylic rubber obtained in Preparation Example 1, 1 part by mass of stearic acid and the compounds as identified in Tables 1 and 4, were kneaded by eight-inch open rolls and rolled into a sheet having a thickness of 2.4 mm, which was then subjected to press vulcanization at 170°C for 20 minutes by a press vulcanization machine. The vulcanized product was further heat treated for 4 hours at 170°C in a gear oven, and then subjected to physical property tests.

### PHYSICAL PROPERTY TEST METHODS

The tensile strength and elongation were measured in accordance with JIS K6251. The hardness was measured in accordance with JIS K6253. For the heat resistance, in accordance with JIS K6257, the elongation at break and the change in hardness by a tensile test after exposure at 200°C for 168 hours (200°C x 168 h) were obtained. The smaller the absolute value of the change in hardness (ΔHs), the better the heat resistance.

The measurement results regarding the vulcanized product in the respective Examples and Comparative Examples are shown in Tables 1 to 4. In order for an acrylic rubber composition to satisfy the required properties for its particular application, the composition and properties of the rubber itself, the types and amounts of various additives are selected. As is evident from Table 1, the vulcanized rubber obtained by vulcanizing the acrylic rubber composition of the present invention shows less changes in its elongation at break (EB) and hardness under heating conditions.

**TABLE 1**

| Composition (parts by mass) | | | Examples | | | | | |
|---|---|---|---|---|---|---|---|---|
| | | | 1 | 2 | 3 | 4 | 5 | 6 |
| Acrylic rubber | | | 100 | 100 | 100 | 100 | 100 | 100 |
| High abrasion furnace carbon black | | | 50 | 50 | 50 | | | |
| Fast extruding furnace carbon black | | | | | | | | |
| Semi-reinforcing furnace carbon black | | | | | | | | |
| Acetylene black | | | | | | 55 | 55 | 55 |
| 4,4'-α,α-dimethylbenzyldiphenylamine | | | 2 | 2 | 2 | 2 | 2 | 2 |
| Tris(nonylphenyl) phosphite | | | 1 | | | 1 | | |
| Triisodecyl phosphite | | | | 1 | | | 1 | |
| Dilauryl thiodipropionate | | | | | 1 | | | 1 |
| 2-mercaptobenzimidazole | | | 0.5 | 0.5 | 0.5 | 0.5 | 0.5 | 0.5 |
| Trimethylthiourea | | | 0.5 | 0.5 | 0.5 | 0.5 | 0.5 | 0.5 |
| 1-benzyl-2-ethylimidazole | | | 1.6 | 1.6 | 1.6 | 1.6 | 1.6 | 1.6 |
| Cetyltrimethylammonium bromide | | | 0.5 | 0.5 | 0.5 | 0.5 | 0.5 | 0.5 |
| Normal state | Tensile strength | MPa | 11.0 | 11.0 | 10.7 | 8.2 | 8.4 | 8.5 |
| physical | Elongation at break | % | 525 | 541 | 533 | 602 | 610 | 629 |
| properties | Hardness (JIS-A) | Degree | 65 | 66 | 65 | 66 | 65 | 65 |
| Heat resistance | Tensile strength | MPa | 5.1 | 5.2 | 5.6 | 6.3 | 5.9 | 6.0 |
| 200°Cx168 h | Elongation at break | % | 144 | 149 | 139 | 164 | 168 | 161 |
| | Absolute value of hardness change ΔHs | Degree | 25 | 22 | 25 | 22 | 20 | 22 |

**TABLE 2**

| Composition (parts by mass) | | | Examples | | | | | |
|---|---|---|---|---|---|---|---|---|
| | | | 7 | 8 | 9 | 10 | 11 | 12 |
| Acrylic rubber | | | 100 | 100 | 100 | 100 | 100 | 100 |
| High abrasion furnace carbon black | | | | | | | | |
| Fast extruding furnace carbon black | | | | | | | | |
| Semi-reinforcing furnace carbon black | | | | | | | | |
| Acetylene black | | | 55 | 55 | 55 | 55 | 55 | 55 |
| 4,4'-α,α-dimethylbenzyldiphenylamine | | | 2 | 2 | 5 | 2 | 2 | 2 |
| Tris(nonylphenyl) phosphite | | | 3 | 1 | 1 | 1 | | |
| Triisodecyl phosphite | | | | | | | 1 | |
| Dilauryl thiodipropionate | | | | | | | | 1 |
| 2-mercaptobenzimidazole | | | 0.5 | 2 | 0.5 | | | |
| Trimethylthiourea | | | 0.5 | 0.5 | 0.5 | 0.5 | 0.5 | 0.5 |
| 1-benzyl-2-ethylimidazole | | | 1.6 | 1.6 | 1.6 | 1.6 | 1.6 | 1.6 |
| Cetyltrimethylammonium bromide | | | 0.5 | 0.5 | 0.5 | 0.5 | 0.5 | 0.5 |
| Normal state | Tensile strength | MPa | 8.5 | 8.4 | 8.0 | 8.5 | 8.8 | 9.0 |
| physical | Elongation at break | % | 611 | 614 | 631 | 619 | 622 | 621 |
| properties | Hardness (JIS-A) | Degree | 65 | 66 | 64 | 64 | 64 | 65 |
| Heat resistance | Tensile strength | MPa | 6.0 | 7.1 | 5.6 | 6.7 | 6.2 | 6.3 |
| 200°Cx168 h | Elongation at break | % | 164 | 158 | 170 | 158 | 160 | 154 |
| | Absolute value of hardness change ΔHs | Degree | 25 | 25 | 24 | 25 | 23 | 25 |

**TABLE 3**

| Composition (parts by mass) | | | Examples | | | | | |
|---|---|---|---|---|---|---|---|---|
| | | | 13 | 14 | 15 | 16 | 17 | 18 |
| Acrylic rubber | | | 100 | 100 | 100 | 100 | 100 | 100 |
| High abrasion furnace carbon black | | | 50 | 50 | 50 | | | 50 |
| Fast extruding furnace carbon black | | | | | | 60 | | |
| Semi-reinforcing furnace carbon black | | | | | | | 70 | |
| Acetylene black | | | | | | | | |
| 4,4'-α,α-dimethylbenzyldiphenylamine | | | 2 | 2 | 2 | 2 | 2 | |
| Octylated diphenylamine | | | | | | | | 2 |
| Tris(nonylphenyl) phosphite | | | 1 | | | 1 | 1 | 1 |
| Triisodecyl phosphite | | | | 1 | | | | |
| Dilauryl thiodipropionate | | | | | 1 | | | |
| 2-mercaptobenzimidazole | | | | | | | | 0.5 |
| Trimethylthiourea | | | 0.5 | 0.5 | 0.5 | 0.5 | 0.5 | 0.5 |
| 1-benzyl-2-ethylimidazole | | | 1.6 | 1.6 | 1.6 | 1.6 | 1.6 | 1.6 |
| Cetyltrimethylammonium bromide | | | 0.5 | 0.5 | 0.5 | 0.5 | 0.5 | 0.5 |
| Normal state | Tensile strength | MPa | 11.1 | 11.2 | 11.4 | 8.7 | 7.8 | 11.2 |
| physical | Elongation at break | % | 515 | 526 | 525 | 470 | 488 | 620 |
| properties | Hardness (JIS-A) | Degree | 65 | 64 | 65 | 63 | 60 | 65 |
| Heat resistance | Tensile strength | MPa | 5.5 | 5.8 | 6.0 | 4.0 | 4.1 | 5.1 |
| 200°Cx168 h | Elongation at break | % | 139 | 140 | 131 | 133 | 135 | 141 |
| | Absolute value of hardness change ΔHs | Degree | 28 | 28 | 27 | 26 | 28 | 25 |

**TABLE 4**

| Composition (parts by mass) | | | Comparative Examples | | | | |
|---|---|---|---|---|---|---|---|
| | | | 1 | 2 | 3 | 4 | 5 |
| Acrylic rubber | | | 100 | 100 | 100 | 100 | 100 |
| High abrasion furnace carbon black | | | 50 | 50 | 50 | 50 | 50 |
| Fast extruding furnace carbon black | | | | | | | |
| Semi-reinforcing furnace carbon black | | | | | | | |
| Acetylene black | | | | | | | |
| 4,4'-α,α-dimethylbenzyldiphenylamine | | | | 2 | 2 | 16 | 0.05 |
| Tris(nonylphenyl) phosphite | | | | | | 1 | 1 |
| Triisodecyl phosphite | | | | | | | |
| Dilauryl thiodipropionate | | | | | | | |
| 2-mercaptobenzimidazole | | | | | 1 | | |
| Trimethylthiourea | | | 0.5 | 0.5 | 0.5 | 0.5 | 0.5 |
| 1-benzyl-2-ethylimidazole | | | 1.6 | 1.6 | 1.6 | 1.6 | 1.6 |
| Cetyltrimethylammonium bromide | | | 0.5 | 0.5 | 0.5 | 0.5 | 0.5 |
| Normal state | Tensile strength | MPa | 11.3 | 10.8 | 10.6 | 7.4 | 11.2 |
| physical | Elongation at break | % | 438 | 442 | 444 | 475 | 440 |
| properties | Hardness (JIS-A) | Degree | 65 | 64 | 65 | 64 | 65 |
| Heat resistance | Tensile strength | MPa | 5.4 | 5.2 | 5.5 | 3.6 | 5.6 |
| 200°Cx168 h | Elongation at break | % | 38 | 88 | 80 | 105 | 41 |
| | Absolute value of hardness change ΔHs | Degree | 33 | 30 | 30 | 30 | 32 |

Carbon black materials in Tables 1 to 4 are as follows.
1) High abrasion furnace carbon black: Seast 3H (Lc= at most 1.8 nm), manufactured by Tokai Carbon Co., Ltd.
2) Fast extruding furnace carbon black: Asahi #60 (Lc= at most 1.8 nm), manufactured by Asahi Carbon Co., Ltd.
3) Semi-reinforcing furnace carbon black: Asahi #50 (Lc= at most 1.8 nm), manufactured by Asahi Carbon Co., Ltd.
4) Acetylene black: DENKA BLACK granule product (Lc= 3.5 nm), manufactured by Denki Kagaku Kogyo Kabushiki Kaisha

### INDUSTRIAL APPLICABILITY

A vulcanized rubber obtainable by vulcanizing the acrylic rubber composition of the present invention is useful as a sealing article or a rubber vibration insulator. Particularly, a rubber hose is excellent in rubber physical properties such as extrusion processability, tensile strength, and further excellent in oil resistance, cold resistance and heat resistance, so that it can be quite suitably used as a rubber hose for automobiles, which tends to be used in a severe environment.

## Claims

1. An acrylic rubber composition comprising an epoxy group-containing acrylic rubber and, per 100 parts by mass of the epoxy group-containing acrylic rubber, from 10 to 100 parts by mass of carbon black having an average laminated height Lc, determined by X-ray diffraction, of at least 1.5 nm in the C-axis direction of a laminar plane in its crystallite, from 0.1 to 15 parts by mass of at least one primary antioxidant selected from the group consisting of an amine antioxidant and a phenolic antioxidant, from 0.1 to 15 parts by mass of at least one secondary antioxidant selected from the group consisting of a phosphorus antioxidant and a sulfur antioxidant, from 0.1 to 5 parts by mass of an imidazole compound, from 0.1 to 5 parts by mass of a trimethylthiourea, and from 0.1 to 5 parts by mass of a quaternary ammonium salt.

2. The acrylic rubber composition according to Claim 1, wherein the carbon black is one having an average laminated height Lc of at least 2 nm in the C-axis direction of a laminar plane in its crystallite.

3. The acrylic rubber composition according to Claim 1 or 2, wherein the carbon black is acetylene black.

4. The acrylic rubber composition according to any one of Claims 1 to 3, wherein the primary antioxidant is an amine antioxidant.

5. The acrylic rubber composition according to any one of Claims 1 to 4, wherein the primary antioxidant is 4,4'-α,α-dimethylbenzyldiphenylamine, and the secondary antioxidant is at least one member selected from the group consisting of tris(nonylphenyl) phosphite, triisodecyl phosphite and dilauryl thiodipropionate.

6. The acrylic rubber composition according to any one of Claims 1 to 5, which further contains at least one compound selected from the group consisting of 2-mercaptobenzimidazole, 2-mercaptomethylbenzimidazole and 4,5-mercaptomethylbenzimidazole.

7. A vulcanized rubber obtained by vulcanizing the acrylic rubber composition as defined in any one of Claims 1 to 6.

8. A rubber hose comprising the vulcanized rubber as defined in Claim 7.

9. A sealing article comprising the vulcanized rubber as defined in Claim 7.

10. A rubber vibration insulator comprising the vulcanized rubber as defined in Claim 7.

## Patentansprüche

1. Acrylkautschuk-Zusammensetzung, umfassend einen Acrylkautschuk mit einer Epoxidgruppe und, pro 100 Masseteile des die Epoxidgruppe enthaltenden Acrylkautschuks, von 10 bis 100 Masseteile Ruß mit einer durchschnittlichen Schichthöhe Lc, bestimmt mittels Röntgenbeugung, von wenigstens 1,5 nm in Richtung der C-Achse einer Schichtebene in dessen Kristallit, von 0,1 bis 15 Masseteile von wenigstens einem primären Antioxidans, ausgewählt aus der Gruppe, bestehend aus einem Amin-Antioxidans und einem phenolischen Antioxidans, von 0,1 bis 15 Masseteile von wenigstens einem sekundären Antioxidans, ausgewählt aus der Gruppe, bestehend aus einem Phosphor-Antioxidans und einem Schwefel-Antioxidans, von 0,1 bis 5 Masseteile einer Imidazolverbindung, von 0,1 bis 5 Masseteile eines Trimethylharnstoffs und von 0,1 bis 5 Masseteile eines quarternären Ammoniumsalzes.

2. Acrylkautschuk-Zusammensetzung nach Anspruch 1, wobei der Ruß einer mit einer durchschnittlichen Schichthöhe Lc von wenigstens 2 nm in Richtung der C-Achse einer Schichtebene in dessen Kristallit ist.

3. Acrylkautschuk-Zusammensetzung nach Anspruch 1 oder 2, wobei der Ruß Acetylenruß ist.

4. Acrylkautschuk-Zusammensetzung nach einem der Ansprüche 1 bis 3, wobei das primäre Antioxidans ein Amin-Antioxidans ist.

5. Acrylkautschuk-Zusammensetzung nach einem der Ansprüche 1 bis 4, wobei das primäre Antioxidans 4,4'-α.α-Dimethylbenzyldiphenylamin ist und das sekundäre Antioxidans wenigstens ein Mitglied, ausgewählt aus der Gruppe, bestehend aus Tris(nonylphenyl)phosphit, Triisodecylphosphit und Dilaurylthiodipropionat ist.

6. Acrylkautschuk-Zusammensetzung nach einem der Ansprüche 1 bis 5, welche ferner wenigstens eine Verbindung enthält, die ausgewählt ist aus der Gruppe, bestehend aus 2-Mercaptobenzimidazol, 2-Mercaptomethylbenzimidazol und 4,5-Mercaptomethylbenzimidazol.

7. Vulkanisierter Kautschuk, erhalten durch Vulkanisieren der Acrylkautschuk-Zusammensetzung wie in einem der Ansprüche 1 bis 6 definiert.

8. Kautschukschlauch, umfassend den vulkanisierten Kautschuk wie in Anspruch 7 definiert.

9. Dichtmittel, umfassend den vulkanisierten Kautschuk wie in Anspruch 7 definiert.

10. Kautschuk-Vibrationsisolator, umfassend den vulkanisierten Kautschuk wie in Anspruch 7 definiert.

## Revendications

1. Composition de caoutchouc acrylique comprenant un caoutchouc acrylique contenant un groupe époxy et, pour 100 parties en masse du caoutchouc acrylique contenant un groupe époxy, de 10 à 100 parties en masse de noir de carbone présentant une hauteur stratifiée moyenne, Lc, déterminée par diffraction des rayons X, d'au moins 1,5 nm dans la direction de l'axe C d'un plan laminaire dans sa cristallite, de 0,1 à 15 partie (s) en masse d'au moins un antioxydant primaire choisi dans l'ensemble constitué par un antioxydant de type amine et un antioxydant de type phénolique, de 0,1 à 15 partie (s) en masse d'au moins un antioxydant secondaire choisi dans l'ensemble constitué par un antioxydant phosphoré et un antioxydant soufré, de 0,1 à 5 partie(s) en masse d'un composé imidazole, de 0,1 à 5 partie(s) en masse d'une triméthylthiourée, et de 0,1 à 5 partie(s) en masse d'un sel d'ammonium quaternaire.

2. Composition de caoutchouc acrylique selon la revendication 1, dans laquelle le noir de carbone présente une hauteur laminée moyenne Lc d'au moins 2 nm dans la direction de l'axe C d'un plan laminaire dans son cristallite.

3. Composition de caoutchouc acrylique selon la revendication 1 ou 2, dans laquelle le noir de carbone est du noir d'acétylène.

4. Composition de caoutchouc acrylique selon l'une quelconque des revendications 1 à 3, dans laquelle l'antioxydant primaire est un antioxydant de type amine.

5. Composition de caoutchouc acrylique selon l'une quelconque des revendications 1 à 4, dans laquelle l'antioxydant primaire est la 4,4'-α,α-diméthylbenzyl-diphénylamine, et l'antioxydant secondaire est au moins un membre choisi dans l'ensemble constitué par le phosphite de tris(nonylphényle), le phosphite de triisodécyle et le thiodipropionate de dilauryle.

6. Composition de caoutchouc acrylique selon l'une quelconque des revendications 1 à 5, qui contient en outre au moins un composé choisi dans l'ensemble constitué par le 2-mercaptobenzimidazole, le 2-mercaptométhyl-benzimidazole et le 4,5-mercaptométhylbenzimidazole.

7. Caoutchouc vulcanisé obtenu par vulcanisation de la composition de caoutchouc acrylique telle que définie dans l'une quelconque des revendications 1 à 6.

8. Tuyau en caoutchouc comprenant le caoutchouc vulcanisé tel que défini dans la revendication 7.

9. Article d'étanchéité comprenant le caoutchouc vulcanisé tel que défini dans la revendication 7.

10. Isolateur de vibrations en caoutchouc comprenant le caoutchouc vulcanisé tel que défini dans la revendication 7.
